## Europäisches Patentamt
## European Patent Office
## Office européen des brevets

(19)

(11) Publication number: **0 078 656**
**B1**

(12)

# EUROPEAN PATENT SPECIFICATION

(45) Date of publication of patent specification: **30.04.86**

(51) Int. Cl.⁴: **B 65 G 19/24**

(21) Application number: **82305695.7**

(22) Date of filing: **27.10.82**

(54) Improvements in scraper chain conveyors.

(30) Priority: **02.11.81 GB 8132922**

(43) Date of publication of application:
**11.05.83 Bulletin 83/19**

(45) Publication of the grant of the patent:
**30.04.86 Bulletin 86/18**

(84) Designated Contracting States:
**AT DE FR GB**

(56) References cited:
**FR-A-1 233 194**
**FR-A-2 185 559**
**US-A-3 773 427**

(73) Proprietor: **PARSONS CONTROLS LIMITED**
**Stourport on Severn**
**Stourport Worcestershire DY13 9AT (GB)**

(72) Inventor: **Millington, Michael John**
**24 Kendlewood Road**
**Kidderminster Worcestershire DY10 2XQ (GB)**
Inventor: **Chell, Robert 3 Elderberry Close**
**Lickhill Lodge Estate Stourport-on-Severn**
**Stourport Worcestershire DY13 8TF (GB)**

(74) Representative: **Lewis, David Overington**
**c/o Babcock International plc Cleveland House**
**19 St. James's Square**
**London SW1Y 4LN (GB)**

Courier Press, Leamington Spa, England.

## Description

This invention relates to scraper chain conveyors and flight bars therefor and, more particularly, to scraper chain conveyors used to move particulate material, such as coal, along troughs or pans having inwardly lipped side flanges accommodating the conveyor chains.

FR—A—2 185 559 describes a scraper chain conveyor including flight bars each formed with a central portion and end extensions each having associated therewith a shackle having a crown portion approximating to a chain link adapted to link into end links of lengths of conveyor chain and jaws extending adjacent front and rear faces of the associated end extension with a bolt passing through the jaws and an aperture in the end extension to secure the shackle to the flight bar.

However, since the connections between the shackles and the flight bars are rigid, undue strain may be placed on the components due to discontinuities or curvatures between adjoining pans in which the conveyor runs or due to wear occurring on drive sprockets for the conveyor. Whilst FR—A—1 233 194 discloses a conveyor in which a loose connection is provided between the shackles and the flight bars this is achieved by making both a slot in the flight bar and an aperture in the shackle over-size. This is not very satisfactory since undue wear may arise, particularly if abrasive coal or other dust particles penetrate into the gaps.

According to the present invention in such a scraper conveyor it is provided that each aperture is of rectangular form and accommodates, as a loose fit, a spacer formed with a bore for the bolt and having a thickness slightly greater than the thickness of the adjoining portion of the end extension in the direction of motion of the conveyor and having lipped inner and outer end portions loosely co-acting with stepped portions at the inner and outer edges of the aperture slidably to retain the spacer in the aperture.

The invention will now be described, by way of example, with reference to the accompanying, partly diagrammatic, drawings, in which:—

Figure 1 is a cross-sectional elevation of a portion of a scraper chain conveyor showing portions of flight bars in upper and lower races, but with connecting chain and bolts omitted;

Figure 2 is a partly sectional plan view of the lower flight bar and a spacer with an associated shackle or connector piece and securing bolt shown in chain dotted outline;

Figure 3 is an end elevation of the flight bar taken on the line III—III of Figure 1;

Figure 4 is a cross-sectional elevation of a central portion of the flight bar taken on the like IV—IV of Figure 1;

Figure 5 is an elevation of an alternative form of spacer; and

Figure 6 is a plan view of the spacer shown in Figure 5.

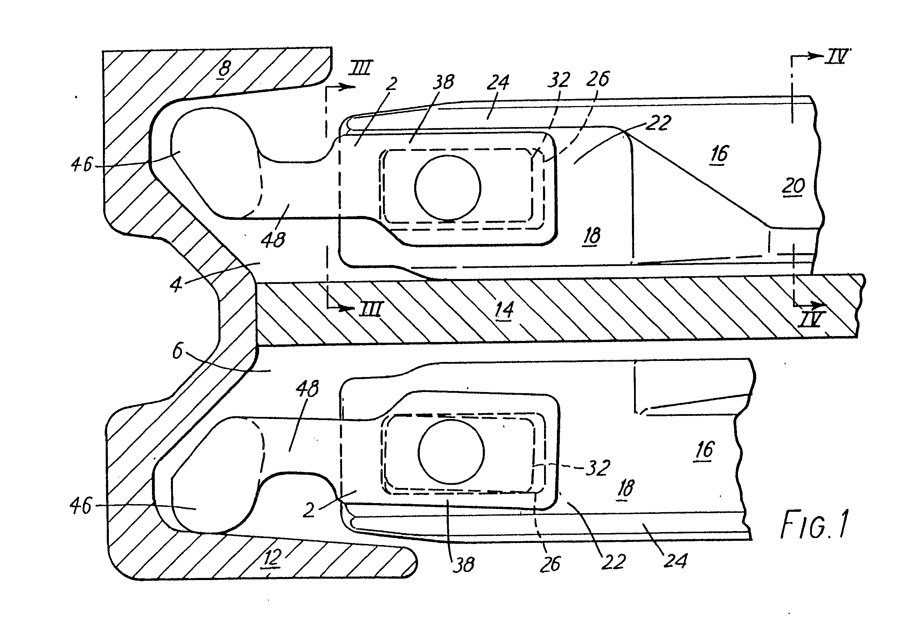

Referring to Figures 1 to 4, a scraper chain conveyor includes a series of lengths of chain (not shown) connected together by shackles or connector pieces 2 to form a pair of endless chains passing around sprocket wheels (not shown) and running in upper and lower races 4, 6 formed by inwardly directed flanges 8, 12 on pans 14 extending the length of the conveyor. The shackles or connector pieces 2 are arranged in register in the two chains to give spaced pairs of shackles or connector pieces. Flight bars 16, of a cross-section generally approximating to square, are bolted to the shackles or connector pieces to extend across the pan, or trough, 14.

In order to effect the connection between the flight bar 16 and the corresponding shackles or connector pieces 2, end extensions 18 are formed on the flight bar, merging from the generally square cross-section of the central portion 20 to a generally T-shaped cross-section with an upright web 22 and an upper, horizontal, flange 24. A ractangular aperture 26 is formed in the upright web 22 of each end extension 18 with the web thinned down to provide stepped portions 28, 30 at the inner and outer edges of aperture. A rectangular spacer 32 formed with lipped inner and outer end portions 34, 36 is positioned in the aperture with the lipped portions co-acting with the stepped portions of the web slidably to retain the spacer in the aperture, in a normal operating position. The length of the inner lipped portions 34 is, however, such as to permit assembly of the spacer into the aperture. The height of the spacer 32 is slightly less than the height of the aperture 26 in the upright web 22.

The thickness of the spacer 32 is slightly greater than the thickness of the upright web 22, such that upon positioning the spacer between jaws 38 of an associated shackle or connector piece 2 limited movement between the spacer and the upright web is not restrained. The faces 40 of the jaws 38 of the shackle or connector piece 2 are held in contact with the spacer by means of a nut 42 and bolt 44, the bolt extending through corresponding bores in the jaws and the spacer.

In operation, the flight bars 16 are assembled into the jaws 38 of pairs of shackles or connector pieces 2 positioned at spaced intervals to form the endless conveyor chain. Bolts 44 are inserted into the corresponding bores and nuts 42 tightened down onto the corresponding outer faces of the jaws. Upon operating the conveyors, minor discontinuities or curvatures between adjoining pans 14 and sprockets having out-of-true chain centres are accommodated by limited sliding movement of the spacers 32, both horizontally and vertically, within the apertures 26 without putting undue strain on the shackle or connecting piece or the bolt, thereby tending to give a smooth progression of the flight bars along the pans and also tending to avoid damage to the bolts, thereby facilitating removal of individual bolts when it is required to replace a flight bar due to wear.

The shackles or connector pieces 2 are each formed with an outwardly and upwardly directed protuberance 46 linking the crown portions 48 which serves to reduce any tendency of the coal particles to build up as deposits adjacent the flange and thereby impede smooth progress of the conveyor.

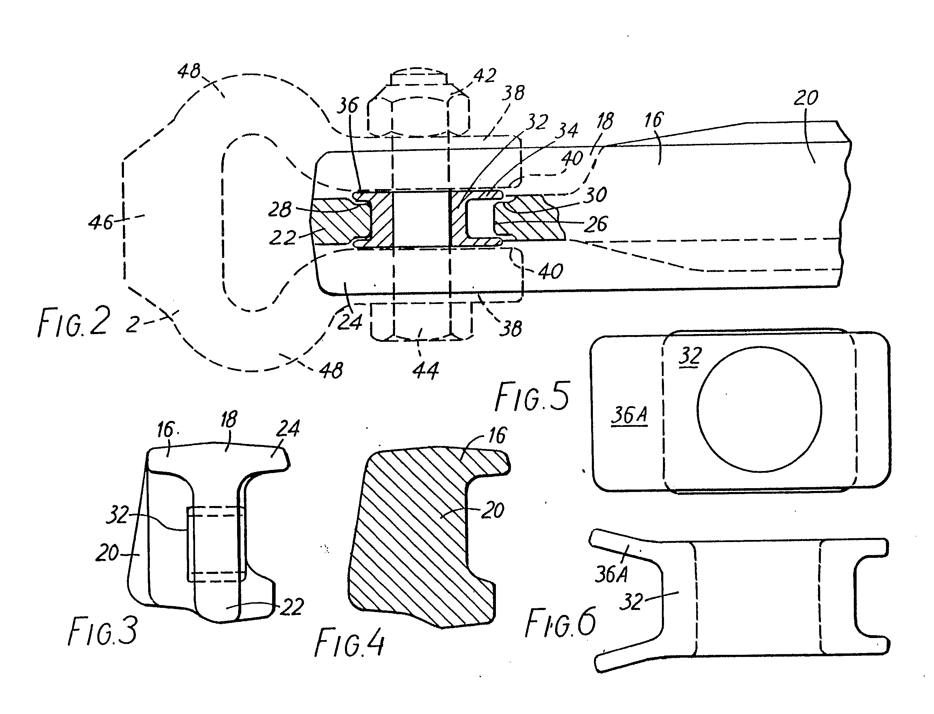

In the alternative form of the spacer 32 shown in Figures 5 and 6, lipped outer end portions 36A are splayed outwardly to facilitate assembly and the limited sliding movement in operation.

## Claims

1. A scraper chain conveyor including flight bars (16) each formed with a central portion (20) and end extensions (18) each having associated therewith a shackle (2) having a crown portion (48) approximating to a chain link adapted to link into end links of lengths of conveyor chain and jaws (38) extending adjacent front and rear faces of the associated end extension (18) with a bolt (44) passing through the jaws (38) and an aperture (26) in the end extension to secure the shackle to the flight bar characterised in that each aperture (26) is of rectangular form and accommodates, as a loose fit, a spacer (32) formed with a bore for the bolt (44) and having a thickness slightly greater than the thickness of the adjoining portion of the end extension in the direction of motion of the conveyor and having lipped inner and outer end portions (34, 36, 36A) loosely co-acting with stepped portions (28, 30) at the inner and outer edges of the aperture slidably to retain the spacer in the aperture.

2. A scraper chain conveyor as claimed in Claim 1, characterised in that the lips of the lipped outer end portion 36A of the spacer diverge outwardly to conform with correspondingly diverging faces formed on the jaws (38).

## Patentansprüche

1. Kratzkettenförderer mit Mitnahmestäben (16), die jeweils mit einem mittleren Abschnitt (20) und Endverlängerungen (18) versehen sind, denen jeweils ein Schäkel (2) mit einem Kronenabschnitt (48) zugeordnet ist, der sich einer Kettenverbindung nähert, die in die Endverbindung der Längen der Förderkette einbringbar sind, sowie mit Backen (38), die sich nahe den Vorder- und Hinterflächen der zugeordneten Endverlängerung (18) erstrecken, wobei ein Bolzen (44) durch die backen (38) und eine Öffnung (26) in der Endverlängerung sich erstreckt, um den Schäkel mit dem Mitnehmerstab zu verbinden, dadurch gekennzeichnet, daß jede Öffnung (26) rechteckig ist und als Grobpassung einen Abstandshalter (32) mit einer Bohrung für den Bolzen (44) aufnimmt, der eine Dicke hat, die etwas größer ist als die Dicke des benachbarten Abschnittes der Endverlängerung in Bewegungsrichtung des Förderers, und gelippte, innere und äußere Endabschnitte (34, 36, 36A) hat, die frei mit gestuften Abschnitten (28, 30) an den inneren und äußeren Rändern der Öffnung verschieblich zusammenwirkt, um den Abstandshalter in der Öffnung zu halten.

2. Kratzkettenförderer nach Anspruch 1, dadurch gekennzeichnet, daß die Lippen des gelippten äußeren Endabschnittes (36A) des Abstandshalters nach außen divergieren, um entsprechenden divergierenden Flächen an den Backen (38) zu entsprechen.

## Revendications

1. Transporteur à raclettes comportant des barres volantes (16) présentant chacune une partie médiane (20) et des prolongements terminaux (18) à chacun desquels est associée une manille (2) présentant une anse (48) se rapprochant d'un maillon de chaîne propre à s'accrocher dans des maillons terminaux de tronçons de chaîne transporteuse et des mâchoires (38) s'étendant auprès de faces avant et arrière du prolongement terminal associé (18), un boulon (44) traversant les mâchoires (38) et une ouverture (26) étant ménagée dans le prolongement terminal pour fixer la maille à la barre volante, caractérisé en ce que chaque ouverture (26) est de forme rectangulaire et reçoit, à ajustage lâche, une cale d'épaisseur (32) présentant un alésage pour le boulon (44) et ayant une épaisseur légèrement supérieure à l'épaisseur de la partie contiguë du prolongement d'extrémité dans le sens de mouvement du transporteur et présentant des parties extrêmes intérieure et extérieure à rebord (34, 36, 36A) coopérant lâchement avec des parties en gradins (28, 30) prévues sur les bords intérieur et extérieur de l'ouverture pour retenir à coulissement la cale d'épaisseur dans l'ouverture.

2. Transporteur à raclettes selon la revendication 1, caractérisé en ce que les rebords de la partie terminale extérieure à rebords (36A) de la cale d'épaisseur divergent vers l'extérieur pour épouser des faces divergeant de manière correspondante formées sur les mâchoires (38).

FIG.1

FIG.2

FIG.3

FIG.4

FIG.5

FIG.6

0 078 656